# EUROPÄISCHE PATENTANMELDUNG

(11) **EP 3 594 168 A1**
(43) Veröffentlichungstag der Anmeldung: **15.01.2020**
(21) Anmeldenummer: 18183445.8
(22) Anmeldetag: 13.07.2018
(51) Int. Cl.: B66C 13/46, G02B 27/01, B66C 13/40, G01B 11/14, B60R 1/00

(54) **KRANSTEUERUNG MIT VISUALISIERUNGSVORRICHTUNG**

(71) Anmelder: EPSILON Kran GmbH., 5020 Salzburg (AT)
(72) Erfinder: LEITNER, Josef, 5330 Fuschl am See (AT); GALLER, Martin, 5421 Adnet (AT)
(74) Vertreter: Torggler & Hofinger Patentanwälte

(57) **Zusammenfassung**

Kransteuerung für einen Kran (1), mit einer Visualisierungsvorrichtung (2), welche dazu ausgebildet ist, ein Tiefeninformation aufweisendes Kamerabild (3) eines Arbeitsumfelds des Krans (1) für einen Bediener (4) der Kransteuerung stereoskopisch zu visualisieren, wobei die Visualisierungsvorrichtung (2) dazu konfiguriert ist, in einer das Kamerabild (3) überlagernden Darstellung eine grafische Hilfsdarstellung (5) anzuzeigen, welche eine an sich im Kamerabild (3) erkennbare Abmessung visualisiert, und dass die Visualisierungsvorrichtung (2) eine Anzeigeeinrichtung umfasst, welche das stereoskopisch visualisierte Kamerabild (3) mitsamt der überlagerten grafischen Hilfsdarstellung (5) anzeigt.

## Beschreibung

Die Erfindung betrifft eine Kransteuerung für einen Kran mit den Merkmalen des Oberbegriffs des Anspruchs 1 und einen Kran mit einer solchen Kransteuerung.

Es sind bereits Kransteuerungen mit einer Visualisierungsvorrichtung bekannt, welche dazu ausgebildet ist, ein Tiefeninformation aufweisendes Kamerabild eines Arbeitsumfelds des Krans für einen Bediener der Kransteuerung stereoskopisch zu visualisieren.

Bei der Benutzung solcher Kransteuerungen kann es für einen Bediener schwierig sein, die an sich im stereoskopischen Kamerabild enthaltene Tiefeninformation korrekt zu interpretieren. Dies kann zu Fehlbedienungen bis hin zu Beschädigungen des Krans oder des Arbeitsumfelds führen.

Aufgabe der Erfindung ist die Bereitstellung einer gattungsgemäßen Kransteuerung und eines Krans mit einer solchen Kransteuerung, bei welchen es für den Bediener einfacher ist, die im stereoskopischen Kamerabild enthaltene Tiefeninformation korrekt zu interpretieren.

Diese Aufgabe wird durch eine Kransteuerung mit den Merkmalen des Anspruchs 1 und einen Kran mit einer solchen Kransteuerung gelöst. Vorteilhafte Ausführungsformen der Erfindung sind in den abhängigen Ansprüchen definiert.

Weil die Visualisierungsvorrichtung dazu konfiguriert ist, in einer das Kamerabild überlagernden Darstellung eine grafische Hilfsdarstellung anzuzeigen, welche eine an sich im Kamerabild erkennbare Abmessung visualisiert, und die Visualisierungsvorrichtung eine Anzeigeeinrichtung umfasst, welche das stereoskopisch visualisierte Kamerabild mitsamt der überlagerten Hilfsdarstellung anzeigt, muss sich der Bediener nicht mehr ausschließlich auf die durch die Anzeigevorrichtung vermittelte Wahrnehmung einer aus der Tiefeninformation abgeleiteten Abmessung verlassen. Dies führt zu einer Entlastung des Bedieners und einer genaueren und sichereren Steuerung des Krans.

Bei einem Ausführungsbeispiel der Erfindung ist vorgesehen, dass die Anzeigeeinrichtung in Form einer Virtual-Reality-Brille oder eines 3D-Bildschirms ausgebildet ist.

Bei einem Ausführungsbeispiel der Erfindung ist vorgesehen, dass die Hilfsdarstellung einen Abstand eines vorgebbaren oder vorgegebenen Arbeitsteils des Krans zu einem vorgebbaren oder vorgegebenen Referenzobjekt im Arbeitsumfeld des Krans visualisiert. Beim Referenzobjekt kann es sich beispielsweise um ein Greifgut, eine Person, ein Tier, ein Fahrzeug, ein Hindernis oder um einen Untergrund oder einen Boden handeln.

Es kann vorgesehen sein, dass die grafische Hilfsdarstellung 5 eine Warndarstellung 8 umfasst, die visualisiert wird wenn der Abstand zwischen dem vorgebbaren oder vorgegebenen Arbeitsteil 6 des Krans 1 und dem vorgebbaren oder vorgegebenen Referenzobjekt 7 unterhalb eines vorgebbaren Werts ist.

Bei einem Ausführungsbeispiel der Erfindung ist vorgesehen, dass der Abstand des vorgebbaren oder vorgegebenen Arbeitsteils des Krans zu dem vorgebbaren oder vorgegebenen Referenzobjekt in Form einer in der Größe proportional zum Abstand dargestellten Markierung visualisiert ist, vorzugsweise an einer dem Arbeitsteil des Krans zugewandten Oberfläche des Referenzobjekts. Die Markierung kann beispielsweise als Kreis, Rechteck, Kreuz, Quadrat, Quader o. ä. ausgebildet sein.

Bei einem Ausführungsbeispiel der Erfindung ist vorgesehen, dass die grafische Hilfsdarstellung eine Abmessung eines vorgebbaren oder vorgegebenen Arbeitsteils des Krans zu einem vorgebbaren oder vorgegebenen Referenzobjekt im Arbeitsumfeld des Krans visualisiert.

Vorzugsweise kann vorgesehen sein, dass die grafische Hilfsdarstellung eine Abmessung eines vorgebbaren oder vorgegebenen Arbeitsteils des Krans visualisiert.

Dabei kann vorgesehen sein, dass die grafische Hilfsdarstellung auf einer dem Arbeitsteil des Krans zugewandten Oberfläche eines unterhalb des Arbeitsteils angeordneten Referenzobjekts visualisiert ist.

Schutz wird auch begehrt für einen Kran mit einer vorgeschlagenen Kransteuerung.

Ausführungsbeispiele der Erfindung werden anhand der Figuren beschrieben. Es zeigen:
- Fig. 1: eine Kransteuerung für einen Kran,
- Fig. 2: ein visualisiertes Kamerabild eines Ausführungsbeispiels einer vorgeschlagenen Kransteuerung,
- Fig. 3 und 4: visualisierte Kamerabilder eines weiteren Ausführungsbeispiels einer vorgeschlagenen Kransteuerung,
- Fig. 5 und 6: visualisierte Kamerabilder eines weiteren Ausführungsbeispiels einer vorgeschlagenen Kransteuerung,
- Fig. 7: ein visualisiertes Kamerabild eines weiteren Ausführungsbeispiels einer vorgeschlagenen Kransteuerung und
- Fig. 8: ein visualisiertes Kamerabild eines weiteren Ausführungsbeispiels einer vorgeschlagenen Kransteuerung.

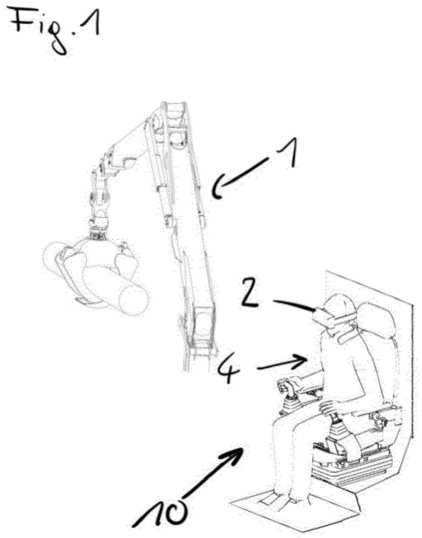

Fig. 1 zeigt eine Kransteuerung für einen Kran 1. Der Kran 1 wird von einem Bediener 4 über eine Bedienvorrichtung 10 gesteuert. Zur Visualisierung des Arbeitsumfelds des Krans 1 trägt der Bediener 4 eine Visualisierungsvorrichtung 2, die eine Anzeigeeinrichtung in Form einer Virtual-Reality-Brille (oder anders als dargestellt eines 3D-Bildschirms) umfasst. Die Visualisierungsvorrichtung 2 ist dazu ausgebildet, ein Kamerabild 3 eines Ausschnitts des Arbeitsumfelds des Krans 1 für den Bediener 8 der Kransteuerung zu visualisieren.

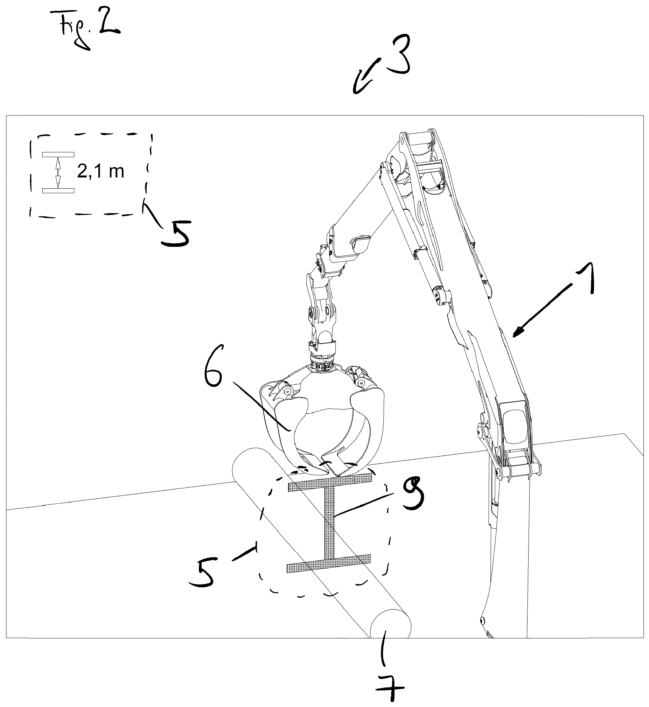

Fig. 2 zeigt ein visualisiertes Kamerabild 3 eines Ausführungsbeispiels einer vorgeschlagenen Kransteuerung. Eine grafische Hilfsdarstellung 5, die dem visualisierten Kamerabild 3 überlagert ist, umfasst eine Markierung 9, welche einen Abstand zwischen einem Arbeitsteil 6 eines Krans 1 in Form eines Greifers und einer dem Arbeitsteil 6 zugewandten Oberfläche eines Referenzobjekts 7 in Form eines Baumstamms als Greifgut. Darüber hinaus umfasst die grafische Hilfsdarstellung 5 eine numerische Anzeige des Abstands.

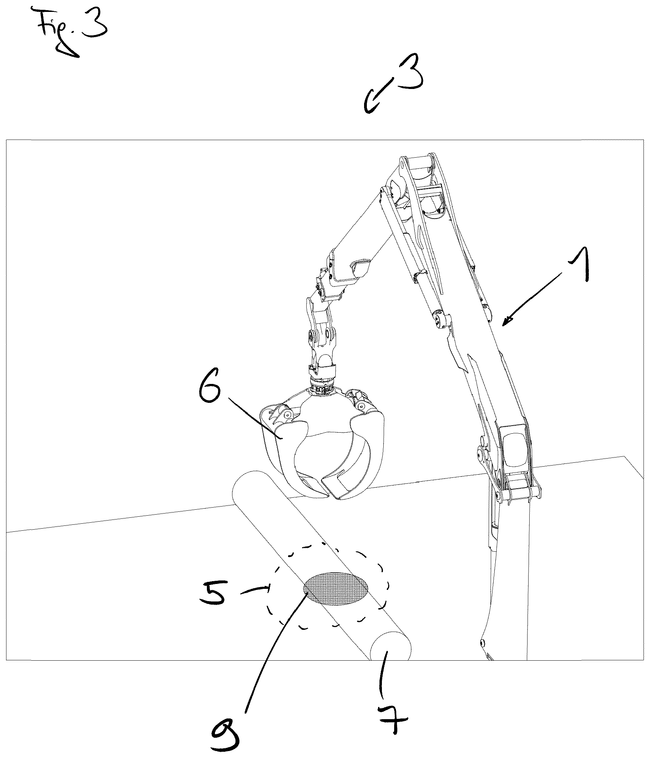

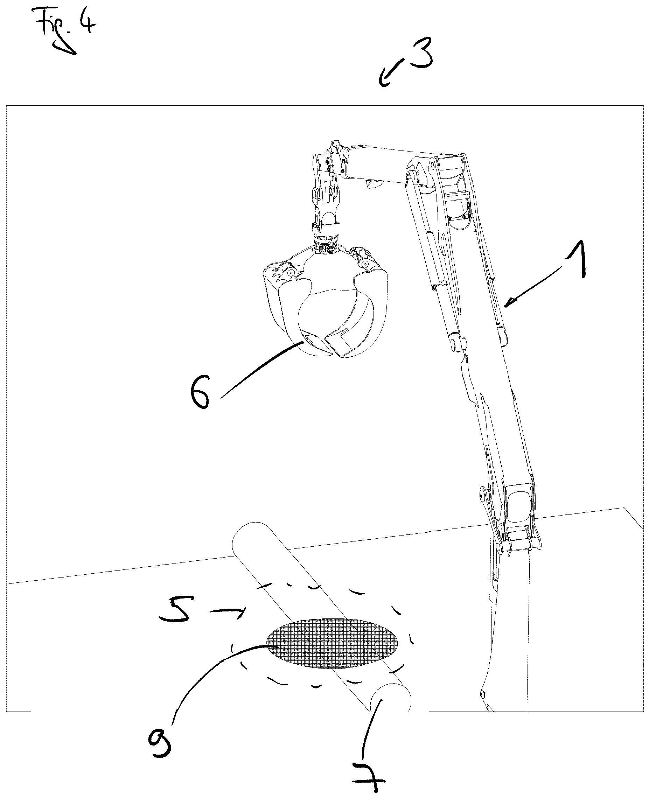

Die Fig. 3 und 4 zeigen visualisierte Kamerabilder 3 eines Ausführungsbeispiels einer vorgeschlagenen Kransteuerung. Eine grafische Hilfsdarstellung 5 umfasst eine Markierung 9, mit welcher ein Abstand eines Arbeitsteils 6 des Krans 1 zu einem Referenzobjekt 7 visualisiert ist. Wie ein Vergleich zwischen den Figuren 3 und 4 zeigt, ist die dargestellte, hier kreisförmige, Markierung 9 in der Größe proportional zum Abstand des Arbeitsteils 6 des Krans 1 zum Referenzobjekt 7.

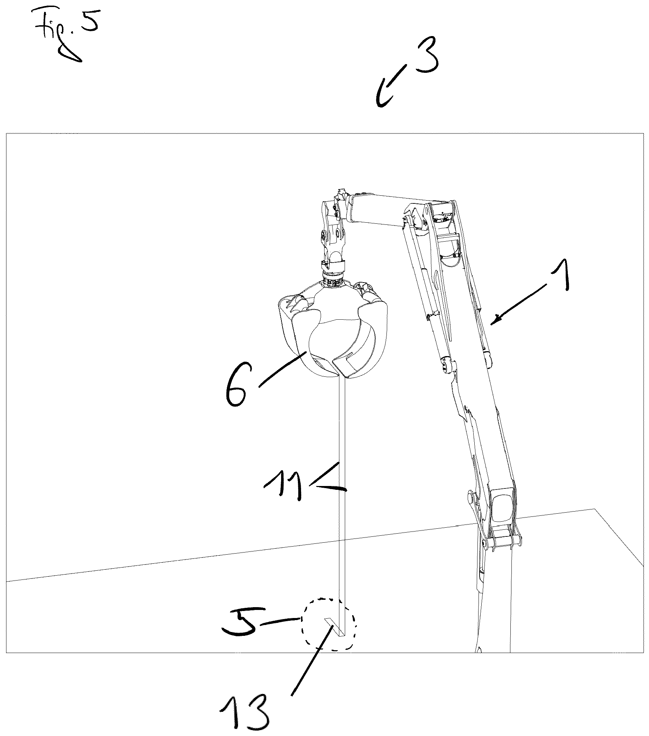

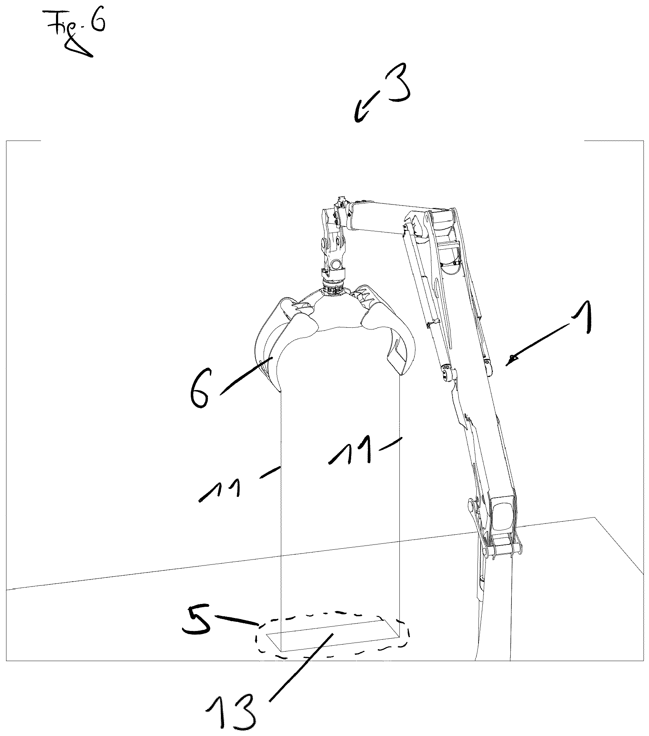

Die Fig. 5 und 6 zeigen visualisierte Kamerabilder 3 eines Ausführungsbeispiels einer vorgeschlagenen Kransteuerung. Eine grafische Hilfsdarstellung 5, die dem visualisierten Kamerabild 3 überlagert ist, umfasst eine Projektion 13, welche Abmessung eines Arbeitsteils 6 des Krans 1 visualisiert. Das Arbeitsteil 6 des Krans 1 ist hier als Greifer mit zwei Greiferbacken ausgebildet. Die grafische Hilfsdarstellung 5 umfasst einen Abstand der Greiferbacken, der beispielsweise durch einen Öffnungswinkel der Greiferbacken erfasst werden kann. Eine Abmessung der Kanten der Greiferbacken kann ebenfalls durch die grafische Hilfsdarstellung 5 visualisiert werden. Die in der grafischen Hilfsdarstellung 5 visualisierte Abmessung kann selbstverständlich - wie auch einem Vergleich der Figuren 5 und 6 entnehmbar ist - den Abmessungen des Arbeitsteils 6 proportional sein. Die Falllinien 11 können optional dargestellt werden.

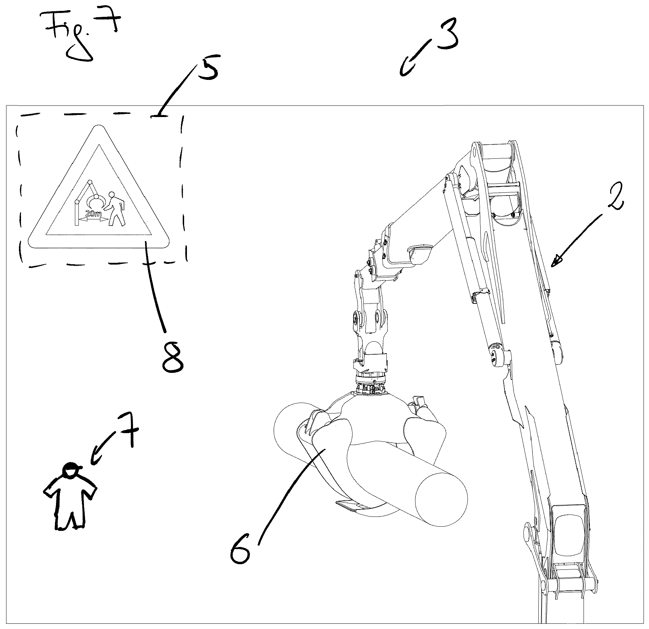

Fig. 7 zeigt ein visualisiertes Kamerabild 3 eines Ausführungsbeispiels einer vorgeschlagenen Kransteuerung. Eine grafische Hilfsdarstellung 5 umfasst hier eine Warndarstellung 8, die visualisiert wird, wenn der Abstand zwischen einem Arbeitsteil 6 des Krans 1 und einem Referenzobjekt 7, wie hier beispielhaft als eine sich innerhalb eines gewissen Abstands zum Kran 1 befindende Person dargestellt, unterhalb eines vorgebbaren Werts ist.

Die in den Fig. 3 bis 7 dargestellten grafischen Hilfsdarstellungen 5 in den jeweiligen visualisierten Kamerabildern 3 können - wie im Beispiel der Fig. 2 gezeigt - auch eine numerische Anzeige des Abstands umfassen.

Vorzugsweise kann vorgesehen sein, dass die vorgeschlagene Kransteuerung wenigstens eine durch den Bediener 4 betätigbare Bedienvorrichtung zur Ansteuerung von Kranbewegungen des Krans 1 umfasst. Bei der wenigstens einen betätigbaren Bedienvorrichtung kann es sich beispielsweise um einen Joystick handeln, der Bewegungen einer Kranspitze des Krans 1 mit mehreren , z. B. drei, Freiheitsgraden ermöglicht. Der Joystick kann eine an sich bekannte Kranspitzensteuerung oder Koordinatensteuerung ermöglichen. Dadurch kann bei Auslenkung des Joysticks in einer Richtung, welcher einer vertikalen Bewegungsrichtung der Kranspitze entspricht, der Kran 1 durch die Kransteuerung derart angesteuert werden, dass die Kranspitze des Krans 1 tatsächlich entlang einer Vertikalen verfährt. Ebenso sind entsprechende Bewegungen in den anderen Freiheitsgraden möglich. Bei Einsatz einer solchen Kranspitzensteuerung oder Koordinatensteuerung sind die in den Fig. 3 bis 7 dargestellten grafischen Hilfsdarstellungen besonders vorteilhaft, da die Kranspitze des Krans 1 durch die Ansteuerung mittels Kranspitzensteuerung oder Koordinatensteuerung linear (z.B. entlang einer Vertikalen) bewegt werden kann.

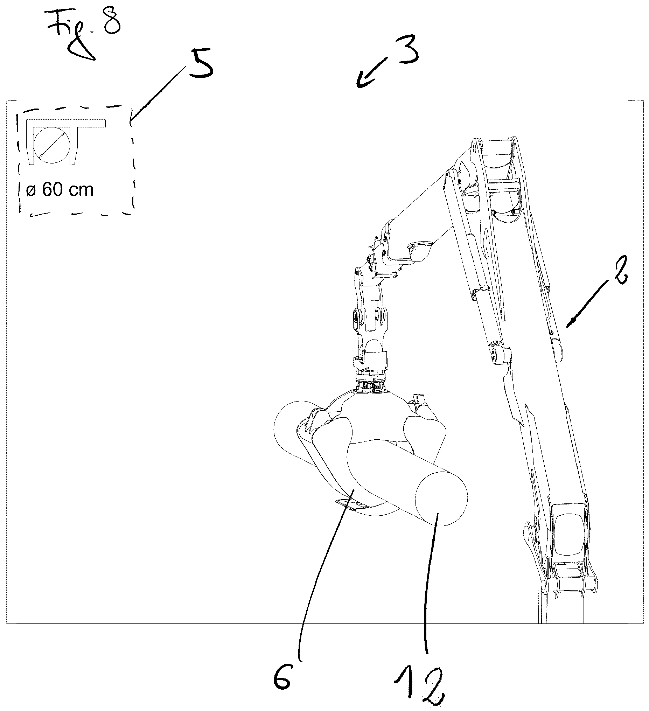

Fig. 8 zeigt ein visualisiertes Kamerabild 3 eines Ausführungsbeispiels einer vorgeschlagenen Kransteuerung. Eine grafische Hilfsdarstellung 5 umfasst eine Abmessung eines Arbeitsteils 6 des Krans 1. Das Arbeitsteil 6 des Krans 1 ist hier als Greifer mit zwei Greiferbacken ausgebildet. Bei einem mit dem Greifer aufgenommenen Greifgut 12 kann eine Abmessung in Form eines Abstands der Greiferbacken zueinander, der beispielsweise durch einen Öffnungswinkel der Greiferbacken erfasst werden kann, und damit ein Durchmesser des Greifguts 12 in Form eines Baumstamms angezeigt werden.

### Bezugszeichenliste:

- 1: Kran
- 2: Visualisierungsvorrichtung
- 3: Kamerabild
- 4: Bediener
- 5: grafische Hilfsdarstellung
- 6: Arbeitsteil
- 7: Referenzobjekt
- 8: Warndarstellung
- 9: Markierung
- 10: Bedienvorrichtung
- 11: Falllinien
- 12: Greifgut
- 13: Projektion

## Patentansprüche

1. Kransteuerung für einen Kran (1), mit einer Visualisierungsvorrichtung (2), welche dazu ausgebildet ist, ein Tiefeninformation aufweisendes Kamerabild (3) eines Arbeitsumfelds des Krans (1) für einen Bediener (4) der Kransteuerung stereoskopisch zu visualisieren, **dadurch gekennzeichnet, dass** die Visualisierungsvorrichtung (2) dazu konfiguriert ist, in einer das Kamerabild (3) überlagernden Darstellung eine grafische Hilfsdarstellung (5) anzuzeigen, welche eine an sich im Kamerabild (3) erkennbare Abmessung visualisiert, und dass die Visualisierungsvorrichtung (2) eine Anzeigeeinrichtung umfasst, welche das stereoskopisch visualisierte Kamerabild (3) mitsamt der überlagerten grafischen Hilfsdarstellung (5) anzeigt.

2. Kransteuerung nach Anspruch 1, wobei die Anzeigeeinrichtung in Form einer Virtual-Reality-Brille oder eines 3D-Bildschirms ausgebildet ist.

3. Kransteuerung nach wenigstens einem der vorangehenden Ansprüche, wobei die grafische Hilfsdarstellung (5) einen Abstand eines vorgebbaren oder vorgegebenen Arbeitsteils (6) des Krans (1) zu einem vorgebbaren oder vorgegebenen Referenzobjekt (7) im Arbeitsumfeld des Krans (1) visualisiert.

4. Kransteuerung nach dem vorangehenden Anspruch, wobei die grafische Hilfsdarstellung (5) eine Warndarstellung (8) umfasst, die visualisiert wird wenn der Abstand zwischen dem vorgebbaren oder vorgegebenen Arbeitsteil (6) des Krans (1) und dem vorgebbaren oder vorgegebenen Referenzobjekt (7) unterhalb eines vorgebbaren Werts ist.

5. Kransteuerung nach wenigstens einem der vorangehenden zwei Ansprüche, wobei der Abstand des vorgebbaren oder vorgegebenen Arbeitsteils (6) des Krans (1) zu dem vorgebbaren oder vorgegebenen Referenzobjekt (7) in Form einer in der Größe proportional zum Abstand dargestellten Markierung (9) visualisiert ist, vorzugsweise an einer dem Arbeitsteil (6) des Krans (1) zugewandten Oberfläche des Referenzobjekts (7).

6. Kransteuerung nach wenigstens einem der vorangehenden Ansprüche, wobei die grafische Hilfsdarstellung (5) eine Abmessung eines vorgebbaren oder vorgegebenen Arbeitsteils (6) des Krans (1) zu einem vorgebbaren oder vorgegebenen Referenzobjekt (7) im Arbeitsumfeld des Krans visualisiert.

7. Kransteuerung nach wenigstens einem der vorangehenden Ansprüche, wobei die grafische Hilfsdarstellung (5) eine Abmessung eines vorgebbaren oder vorgegebenen Arbeitsteils (6) des Krans (1) visualisiert.

8. Kransteuerung nach dem vorangehenden Anspruch, wobei die grafische Hilfsdarstellung (5) auf einer dem Arbeitsteil (6) des Krans (1) zugewandten Oberfläche eines unterhalb des Arbeitsteils (6) angeordneten Referenzobjekts (7) visualisiert ist.

9. Kran (1) mit einer Kransteuerung nach wenigstens einem der vorangehenden Ansprüche.
